# EUROPEAN PATENT SPECIFICATION

(11) **EP 0 469 805 B1**
(45) Date of publication and mention of the grant of the patent: **11.09.1996**
(21) Application number: 91306883.9
(22) Date of filing: 26.07.1991
(51) Int. Cl.: H04N 9/83, H04N 9/79

(54) **Apparatus for producing and recording video signals**
Vorrichtung zum Erzeugen und zum Aufnehmen eines Videosignals
Dispositif de production et d'enregistrement de signaux vidéo

(30) Priority: 31.07.1990 JP 202703/90
(43) Date of publication of application: 05.02.1992
(73) Proprietor: SONY CORPORATION, Tokyo 141 (JP)
(72) Inventor: Ezaki, Tadashi, c/o Patents Division, Shinagawa-ku, Tokyo 141 (JP)
(74) Representative: Cotter, Ivan John

(56) References cited:
- EP-A- 0 293 992
- EP-A- 0 307 808
- EP-A- 0 372 555
- EP-A- 0 376 675
- EP-A- 0 411 440
- EP-A- 0 414 993
- WO-A-89/12372
- DE-A- 3 917 576
- GB-A- 2 049 374
- US-A- 4 647 983
- US-A- 4 743 978
- US-A- 4 890 165
- IEEE TRANSACTIONS ON CONSUMER ELECTRONICS. vol. 35, no. 3, 30 August 1989, NEW YORK US pages 202 - 206; Y.NAGAOKA ET AL: 'A two-channel recording VCR using orthogonal arrangement of heads'
- PATENT ABSTRACTS OF JAPAN vol. 13, no. 333 (E-794)26 July 1989 & JP-A-01 097 079

## Description

This invention relates to apparatus for producing and recording video signals.

There have been proposed various television systems in which the aspect ratio of the reproduced picture is 3:4. In such a system, a video camera is operative to pick up images of subjects in a picture area with an aspect ratio of 3:4 and to produce a video signal based on a pick-up output signal corresponding to the images of the subjects in the picture area; and a video signal recording apparatus, such as a video tape recorder (VTR), is operative to process a video signal from which a reproduced picture of the aspect ratio of 3:4 (hereinafter, referred to as a video signal of 3:4 aspect ratio) can be produced, and to record the processed video signal on a recording medium, such as a magnetic tape.

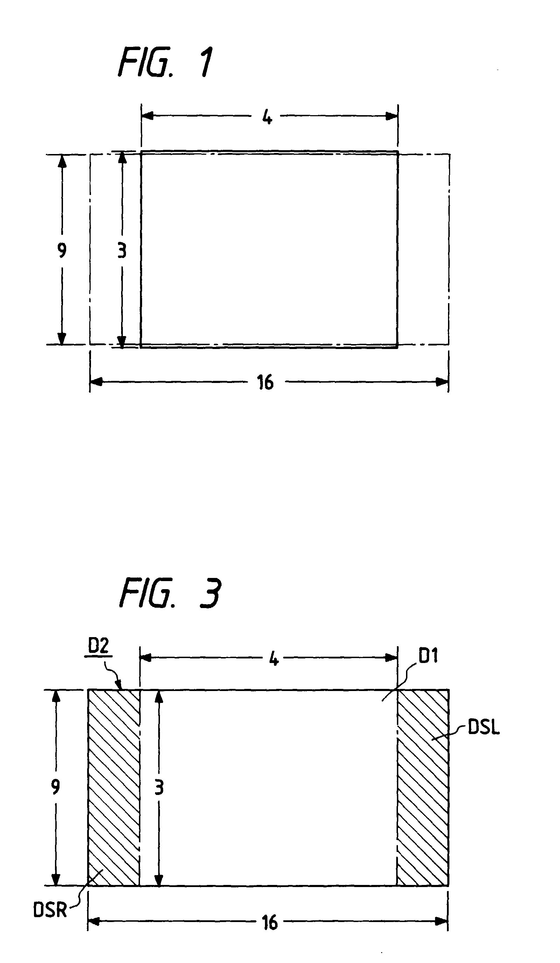

With diversification in the use of reproduced pictures based on a television signal, there has also been proposed a television system in which a reproduced picture has an aspect ratio of 9:16, as shown with a broken line in Figure 1, which is horizontally enlarged compared with a reproduced picture of aspect ratio of 3:4, as shown with a solid line in Figure 1. A video signal from which a reproduced picture of aspect ratio of 9:16 (hereinafter, referred to as a video signal of 9:16 aspect ratio) is obtained, is produced by a video camera which is operative to pick up images of subjects in a picture area with the aspect ratio of 9:16 and to produce the video signal based on a pick-up output signal corresponding to the images of the subjects in the picture area with the aspect ratio of 9:16. The video signal of 9:16 aspect ratio has increased information in the horizontal direction, and increased high frequency components compared with the video signal of 3:4 aspect ratio, so has an enlarged occupied frequency bandwidth. The reproduced picture of aspect ratio of 9:16 has a horizontal resolution of, for example, 400 lines.

In view of the above situation, it is desired to provide a video camera which can pick up images of subjects in a picture area with the aspect ratio of 3:4 and produce a video signal based on the pick-up output signal corresponding to the aspect ratio of 3:4, and can also pick up images of subjects in a picture area with the aspect ratio of 9:16 and produce a video signal based on the pick-up output signal corresponding to the aspect ratio of 9:16, as selected by a user.

To record the video signal of 9:16 aspect ratio, it is usual to use a VTR for recording the video signal on a magnetic tape. Since the video signal of 9:16 aspect ratio has increased information in the 5 horizontal direction and increased high frequency components compared with the video signal of 3:4 aspect ratio, and has the enlarged occupied frequency bandwidth, when a VTR intended for recording the video signal of 3:4 aspect ratio is used for recording the video signal of 9:16 aspect ratio, there tends to be loss of high frequency components, and therefore a reproduced picture based on the video signal of 9:16 aspect ratio read from the magnetic tape has reduced horizontal resolution. Accordingly, it is also desired to provide a VTR which can satisfactorily record the video signal of 3:4 aspect ratio and the video signal of 9:16 aspect ratio.

Moreover, it is further desired to provide a VTR combined with a video camera, which contains a magnetic tape recording and/or reproducing device operating as a VTR and an image pick-up device functioning as a video camera, combined in a single apparatus, and which can selectively produce both the video signal of 3:4 aspect ratio and the video signal of 9:16 aspect ratio, and selectively record both the video signal of 3:4 aspect ratio and the video signal of 9:16 aspect ratio on the magnetic tape properly without constraint in frequency.

According to the present invention there is provided an apparatus for producing and recording a video signal, the apparatus comprising:
signal supplying means operative to pick up images in a picture area with one of first and second forms to supply selectively a first pick-up output signal corresponding to the images in the picture area of the first form and a second pick-up output signal corresponding to the images in the picture area of the second form;
signal recording means comprising signal processing circuit means which is caused to be selectively in a first condition for processing the first pick-up output signal to produce a first video signal and in a second condition for processing the second pick-up output signal to produce a second video signal, and recording head means for recording one of the first and second video signals produced by said signal processing circuit means on a recording medium; and
operation control means for controlling said signal supplying means and said signal recording means so as selectively to cause said signal supplying means to be operative to supply the first pick-up output signal and said signal processing circuit means in said signal recording means to be in the first condition, and to cause said signal supplying means to be operative to supply the second pick-up output signal and said signal processing circuit means in said signal recording means to be in the second condition (see US-A-4 890 165); characterised in that said first form is a first aspect ratio, said second form is a second aspect ratio and said second video signal has greater bandwidth than said first video signal.

Thus an embodiment of the invention may provide an apparatus for producing and recording a video signal, by which either of a video signal of a first aspect ratio of, for example, 3:4 and a video signal of a second aspect ratio of, for example, 9:16 can be satisfactorily produced in accordance with selection by a user, and the produced video signal of the first aspect ratio or of the second aspect ratio can be satisfactorily recorded on a recording medium without constraint in frequency or other restrictions.

In an embodiment of apparatus thus constituted in accordance with the present invention, under control by the operation control device, the signal recording portion is automatically caused to produce the first video signal, from which a reproduced picture of the first aspect ratio of, for example, 3:4 is obtained, based on the first pick-up output signal when the signal supplying device is operative to pick up images in the picture area with the first aspect ratio to supply the first pick-up output signal corresponding to the images in the picture area of the first aspect ratio, and the signal recording portion is automatically caused to produce the second video signal, from which a reproduced picture of the second aspect ratio of, for example, 9:16 is obtained, based on the second pick-up output signal when the signal supplying device is operative to pick up images in the picture area with the second aspect ratio to supply the second pick-up output signal corresponding to the images in the picture area of the second aspect ratio.

Accordingly, either of the first video signal from which reproduced pictures of the first aspect ratio of, for example, 3:4 is obtained and the second video signal from which reproduced pictures of the second aspect ratio of, for example, 9:16 is obtained, is produced through respective appropriate signal processing in accordance with selection by a user, and the first or second video signal thus produced is properly recorded on the recording medium without constraint in frequency or other restrictions.

The invention will now be described by way of example with reference to the accompanying drawings, throughout which like parts are referred to by like references, and in which:
Figure 1 shows aspect ratios of reproduced pictures;
Figure 2 is a schematic block diagram showing a first embodiment of video signal producing and recording apparatus according to the present invention;
Figure 3 shows an aspect ratio of a reproduced picture;
Figure 4 is a frequency spectrum of a video signal recorded on a magnetic tape;
Figure 5 is a schematic block diagram showing a reproduced system used for reproducing a video signal recorded on a magnetic tape by the first embodiment;
Figure 6 is a schematic block diagram showing a second embodiment of video signal producing and recording apparatus according to the present invention;
Figure 7 is a frequency spectrum of a video signal recorded on a magnetic tape;
Figure 8 is a schematic block diagram showing a reproducing system used for reproducing a video signal recorded on a magnetic tape by the second embodiment;
Figure 9 is a schematic block diagram showing a third embodiment of video signal producing and recording apparatus according to the present invention; and
Figure 10 is a schematic block diagram showing a reproducing system used for reproducing a video signal recorded on a magnetic tape by the third embodiment.

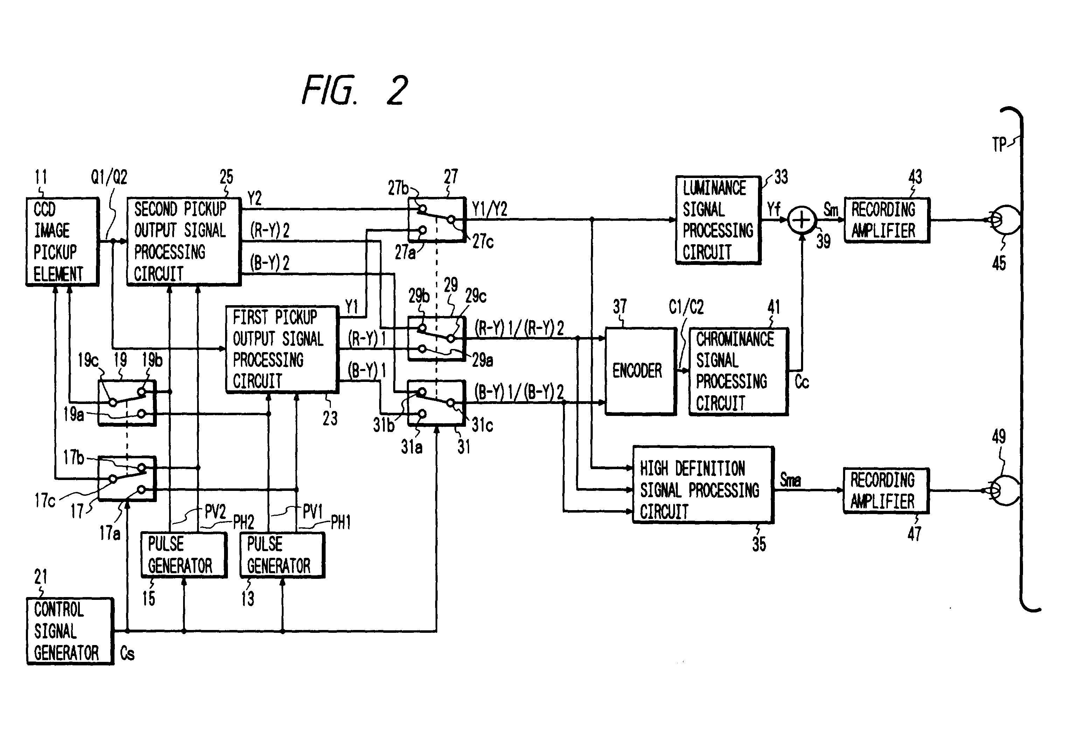

Referred to Figure 2, which shows the first embodiment, a solid state image pick-up element 11 formed with a charge coupled device (CCD) (hereinafter, referred to as the CCD element 11) is provided. Pulse generators 13 and 15 are provided for supplying the CCD element 11 with driving pulses. The pulse generator 13 produces a horizontal driving pulse PH1 and a vertical driving pulse PV1, and the pulse generator 15 produces a horizontal driving pulse PH2 and a vertical driving pulse PV2. The driving pulses PH1 and PV1 constitute a first pair of driving pulses used for producing a video signal of 3:4 aspect ratio, and the driving pulses PH2 and PV2 constitute a second pair of driving pulses used for producing a video signal of 9:16 aspect ratio. The horizontal pulse PH2 is higher in frequency than the horizontal pulse PH1, and each of the vertical pulses PV1 and PV2 has the same frequency.

The horizontal pulse PH1 from the pulse generator 13 and the horizontal pulse PH2 from the pulse generator 15 are supplied to selective contacts 17a and 17b of a switch 17, respectively, and derived selectively through a movable contact 17c to be applied to the CCD element 11. The vertical pulse PV1 from the pulse generator 13 and the vertical pulse PV2 from the pulse generator 15 are supplied to selective contacts 19a and 19b of a switch 19, respectively, and derived selectively through a movable contact 19c to be applied to the CCD element 11.

The pulse generators 13 and 15 and the switches 17 and 19 are controlled by an aspect ratio changing signal Cs supplied from a control signal generator 21. When the aspect ratio changing signal Cs has a low level, the pulse generator 13 is caused to operate, the pulse generator 15 is caused to be inoperative, the movable contact 17c of the switch 17 engages the selective contact 17a and the movable contact 19c of the switch 19 engages the selective contact 19a, so that the horizontal and vertical pulses PH1 and PV1 are supplied to the CCD element 11 which is driven to pick up images in a picture area with a first aspect ratio of 3:4 and to produce a first pick-up output signal Q1 corresponding to the images with the first aspect ratio of 3:4. On the other hand, when the aspect ratio changing signal Cs has a high level, the pulse generator 13 is caused to be inoperative, the pulse generator 15 is caused to operate, the movable contact 17c of the switch 17 engages the selective contact 17b and the movable contact 19c of the switch 19 engages the selective contact 19b, so that the horizontal and vertical pulses PH2 and PV2 are supplied to the CCD element 11 and the image pick-up element 11 is driven to pick up images in a picture area with a second aspect ratio of 9:16 and to produce a second pick-up output signal Q2 corresponding to the images with the second aspect ratio of 9:16.

The first and second pick-up output signals Q1 and Q2 obtained from the CCD image 11 are supplied to first and second pickup output signal processing circuits 23 and 25, respectively. The first processing circuit 23 is also supplied with the horizontal and vertical pulses PH1 and PV1 from the pulse generator 13, and the second processing circuit 25 is also supplied with the horizontal and vertical pulses PH2 and PV2 from the pulse generator 15. The first processing circuit 23 is operative to cause the first pick-up output signal Q1 to be subjected to predetermined signal processing so as to produce a luminance signal Y1, a colour difference signal (R-Y)1 and a colour difference signal (B-Y)1, when the horizontal and vertical pulses PH1 and PV1 are supplied to the first processing circuit 23. The luminance signal Y1, the colour difference signal (R-Y)1, and the colour difference signal (B-Y)1 are supplied to a selective contact 27a of a switch 27, a selective contact 29a of a switch 29 and a selective contact 31a of a switch 31, respectively. The luminance signal Y1 and the colour difference signals (R-Y)1 and (B-Y)1 constitute a video signal of 3:4 aspect ratio. Similarly, the second processing circuit 25 is operative to cause the second pick-up output signal Q2 to be subjected to predetermined signal processing so as to produce a luminance signal Y2, a colour difference signal (R-Y)2 and a colour difference signal (B-Y)2, when the horizontal and vertical pulses PH2 and PV2 are supplied to the second processing circuit 25. The luminance signal Y2, the colour difference signal (R-Y)2 and the colour difference signal (B-Y)2 are supplied to a selective contact 27b of the switch 27, a selective contact 29b of the switch 29, and a selective contact 31b of the switch 31, respectively. The luminance signal Y2 and the colour difference signals (R-Y)2 and (B-Y)2 constitute a video signal of 9:16 aspect ratio, which is provided with increased information in the horizontal direction and increased high frequency components compared with the video signal of 3:4 aspect ratio, so as to have the enlarged occupied frequency bandwidth.

The switches 27, 29 and 31 are controlled by the aspect ratio changing signal Cs supplied from the control signal generator 21. When the aspect ratio changing signal Cs has the low level, the movable contact 27c of the switch 27 engages the selective contact 27a, the movable contact 29c of the switch 29 engages the selective contact 29a, and the movable contact 31c of the switch 31 engages the selective contact 31a, so that the luminance signal Y1, the colour difference signal (R-Y)1, and the colour difference signal (B-Y)1 are obtained from the switches 27, 29 and 31, respectively. When the aspect ratio changing signal Cs has the high level, the movable contact 27c of the switch 27 engages the selective contact 27b, the movable contact 29c of the switch 29 engages the selective contact 29b, and the movable contact 31c of the switch 31 engages the selective contact 31b, so that the luminance signal Y2, the colour difference signal (R-Y)2, and the colour difference signal (B-Y)2 are obtained from the switches 27, 29 and 31, respectively.

The luminance signal Y1 or Y2 obtained from the switch 27 is supplied to a luminance signal processing circuit 33 and a high definition signal processing circuit 35, and the colour difference signal (R-Y)1 or (R-Y)2 obtained from the switch 29 and the colour difference signal (B-Y)1 or (B-Y)2 obtained from the switch 31 are supplied to an encoder 37 and the high definition signal processing circuit 35.

When the aspect ratio changing signal Cs has the low level and therefore the luminance signal Y1, the colour difference signal (R-Y)1 and the colour difference signal (B-Y)1 are obtained from the switches 27, 29 and 31, respectively, a frequency-modulated (FM) luminance signal Yf which is formed based on the luminance signal Y1 is obtained from the luminance signal processing circuit 33 to be supplied to a signal mixing circuit 39, and a chrominance signal C1 formed based on the colour difference signals (R-Y)1 and (B-Y)1 is obtained from the encoder 37 to be supplied to a chrominance signal processing circuit 41. From the chrominance signal processing circuit 41, a down-converted chrominance signal Cc which is formed by frequency-converting the chrominance signal C1 into a lower frequency band is obtained to be supplied to the signal mixing circuit 39.

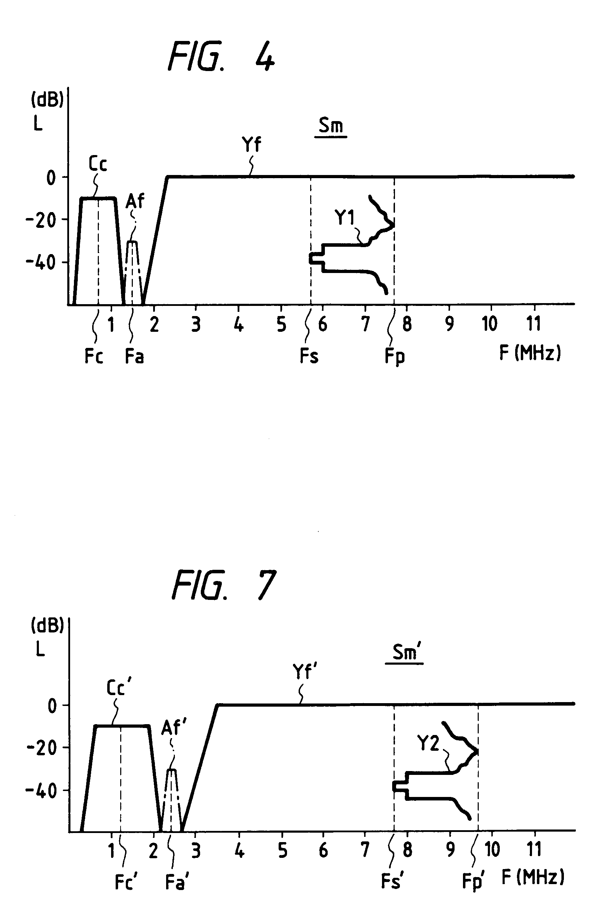

In the signal mixing circuit 39, the FM luminance signal Yf and the down-converted chrominance signal Cc are combined by frequency-multiplexing to produce a first recording video signal Sm which corresponds to images in a picture area D1 with the aspect ratio of 3:4 formed in the CCD element 11, as shown in Figure 3. The first recording video signal Sm is supplied through a recording amplifier 43 to a rotary magnetic head 45 and recorded on a magnetic tape TP by the magnetic head 45 forming a plurality of oblique tracks on the tape TP. The magnetic head 45 is so arranged that each part of the first recording video signal Sm corresponding to one field period of the video signal of 3:4 aspect ratio is recorded in each oblique track.

Incidentally, in such a case, the high definition signal processing circuit 35, to which the luminance signal Y1, the colour difference signal (R-Y)1 and the colour difference signal (B-Y)1 obtained from the switches 27, 29 and 31, respectively, are supplied, does not produce any output signal.

As shown in the frequency spectrum of Figure 4, which has abscissae representing frequency F and ordinates representing level L, the first recording video signal Sm, which is recorded on the tape TP, includes the FM luminance signal Yf having frequency-deviations between frequency Fs and frequency Fp₁ and the down-converted chrominance signal Cc having a carrier frequency Fc and allocated a frequency band lower than the frequency band of the FM luminance signal Yf. An FM audio signal Af having a centre frequency Fa may be allocated a relatively narrow space between the frequency band of the down-converted chrominance signal Cc and the frequency band of the FM luminance signal Yf, as shown with a dot-dash line in Figure 4. The frequency spectrum of Figure 4 is substantially identical with that of a signal recorded on a magnetic tape by a so-called 8mm VTR.

When the aspect ratio changing signal Cs has the high level, and therefore the luminance signal Y2, the colour difference signal (R-Y)2 and the colour difference signal (B-Y)2 are obtained from the switches 27, 29 and 31, respectively, an FM luminance signal Yf which is formed based on a part of the luminance signal Y2 without a high frequency component thereof is obtained from the luminance signal processing circuit 33 to be supplied to the signal mixing circuit 39, and a chrominance signal C2 formed based on a part of each of the colour difference signals (R-Y)2 and (B-Y)2 is obtained from the encoder 37 to be supplied to the chrominance signal processing circuit 41. From the chrominance signal processing circuit 41, a down-converted chrominance signal Cc which is formed by frequency-converting the chrominance signal C2 into a lower frequency band is obtained to be supplied to the signal mixing circuit 39.

In the signal mixing circuit 39, the FM luminance signal Yf and the down-converted chrominance signal Cc are combined by frequency-multiplexing to produce a first recording video signal Sm which corresponds to images in a picture area D1 with the aspect ratio of 3:4 formed in the CCD element 11, as shown in Figure 3. The first recording video signal Sm is supplied through the recording amplifier 43 to the magnetic head 45 and recorded to form a plurality of oblique tracks on the magnetic tape TP.

In this case, an additional recording video signal Sma which is formed by frequency-multiplexing an additional FM luminance signal, which is formed based on another part of the luminance signal Y2 without the high frequency component thereof corresponding to images in a pair of side panels DSL and DSR located outside the picture area D1 with the aspect ratio of 3:4 in a picture area D2 with the aspect ratio of 9:16 formed in the CCD element 11 as shown with hatchings in Figure 3 and the high frequency component of the luminance signal Y2, and an additional down-converted chrominance signal which is formed by frequency-converting another part of each of the colour difference signals (R-Y)2 and (B-Y)2 corresponding to the images in the side panels DSL and DSR into the lower frequency band, is obtained from the high definition signal processing circuit 35. The additional recording video signal Sma thus obtained from the high definition signal processing circuit 35, and the first recording video signal Sm obtained from the signal mixing circuit 39 constitute a second recording video signal which corresponds to images in the picture area D2 with the aspect ratio of 9:16 formed in the CCD element 11, as shown in Figure 3.

The additional recording video signal Sma obtained from the high definition signal processing circuit 35 is supplied through a recording amplifier 47 to a rotary magnetic head 49 and recorded on the tape TP forming a plurality of oblique tracks, which are separated from the oblique tracks formed by the magnetic head 45 on the tape TP. The oblique tracks formed by the magnetic head 45, in each of which the first recording signal Sm is recorded, and the oblique tracks formed by the magnetic head 49, in each of which the additional recording video signal Sma is recorded, are positioned alternatively on the magnetic tape TP, and the second recording video signal which corresponds to the images in the picture area D2 with the aspect ratio of 9:16 formed in the CCD element 11 as shown in Figure 3 is recorded in both of these oblique tracks formed by the magnetic heads 45 and 49. The magnetic head 49 is so arranged that each part of the additional recording video signal Sma corresponding to one field period of the video signal of 9:16 aspect ratio is recorded in each oblique track. The magnetic heads 45 and 49 have gap azimuth angles different from each other.

As described above, in the embodiment of Figure 2, the first recording video signal Sm is obtained based on the video signal of 3:4 aspect ratio formed by the luminance signal Y1 and the colour difference signals (R-Y)1 and (B-Y)1, which are formed based on the first pick-up output signal Q1 corresponding to the images in the picture area D1 with the first aspect ratio of 3:4 formed in the CCD element 11, and the second recording video signal formed by the first recording video signal Sm and the additional recording video signal Sma is also obtained based on the video signal of 9:16 aspect ratio formed by the luminance signal Y2 and the colour difference signals (R-Y)2 and (B-Y)2, which are formed based on the second pick-up output signal Q2 corresponding to the images in the picture area D2 with the second aspect ratio of 9:16 formed in the CCD element 11. Then, either of the first recording video signal Sm obtained based on the video signal of 3:4 aspect ratio and the second recording video signal obtained based on the video signal of 9:16 aspect ratio is properly recorded on the tape TP without constraint in frequency or other restrictions.

Although, in the embodiment of Figure 2, the magnetic head 49 is arranged to form on the tape TP the oblique tracks each positioned at a location different from the location at which an oblique track is formed by the magnetic head 45, it is possible to arrange the magnetic head 45 to form on the tape TP oblique tracks each positioned on the oblique track formed by the magnetic head 45 so that the first recording video signal Sm and the second recording video signal are recorded at respective positions on the tape TP different from each other in the direction of the thickness of the tape TP.

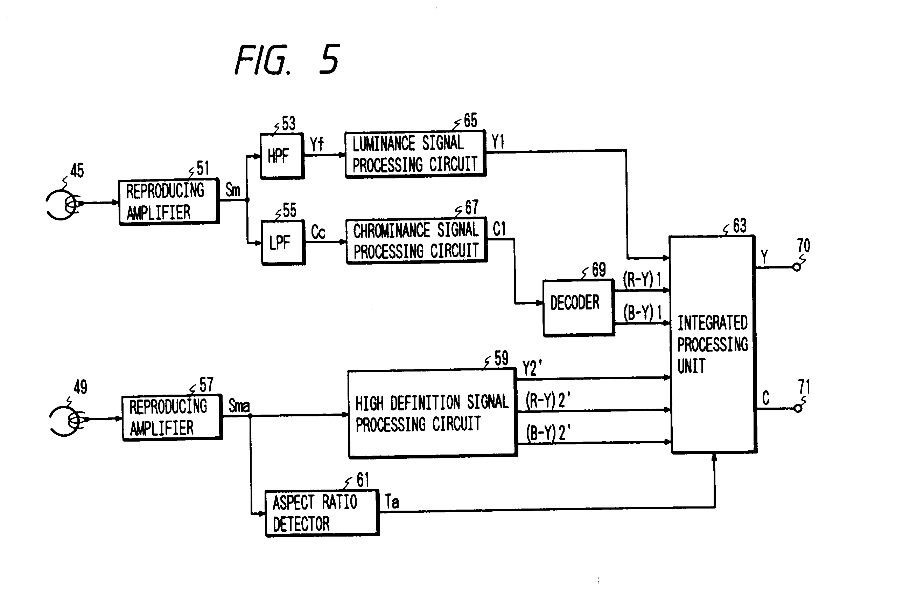

Figure 5 shows a reproducing system for obtaining a reproduced luminance signal and a reproduced chrominance signal from a tape TP on which the first recording video signal Sm based on the video signal of 3:4 aspect ratio or the second recording video signal based on the video signal of 9:16 aspect ratio is recorded by the embodiment of Figure 2.

Referring to Figure 5, the magnetic heads 45 and 49 which are provided in the embodiment of Figure 2 are used as reproducing magnetic heads. The magnetic head 45 is arranged to scan each of record tracks on a magnetic tape in which the first recording video signal Sm is recorded, for reading the first recording video signal Sm from the magnetic tape and the magnetic head 49 is arranged to scan each of record tracks on the magnetic tape in which the additional recording video signal Sma is recorded, for reading the additional recording video signal Sma from the magnetic tape.

The first recording video signal Sm read from the magnetic tape by the magnetic head 45 is supplied through a reproducing amplifier 51 to a high pass filter (HPF) 53 and a low pass filter (LPF) 55. The additional recording video signal Sma read from the magnetic tape by the magnetic head 49 is supplied through a reproducing amplifier 57 to a high definition signal processing circuit 59 and an aspect ratio detector 61.

In the case that the first recording video signal Sm obtained based on the video signal of 3:4 aspect ratio is recorded on the magnetic tape, a read output signal is not obtained from the magnetic head 49, and therefore the additional recording video signal Sma read from the magnetic tape is not supplied to the aspect ratio detector 61, so that a detection output signal Ta having a low level is supplied from the aspect ratio detector 61 to an integrated processing unit 63. Under such a condition, the FM luminance signal Yf is supplied from the HPF 53 to a luminance signal processing circuit 65 and the down-converted chrominance signal Cc is supplied from the LPF 55 to a chrominance signal processing circuit 67.

In the luminance signal processing circuit 65, the FM luminance signal Yf is subjected to various signal processings including frequency-demodulation, and the luminance signal Y1 is produced to be supplied to the integrated processing unit 63. In the chrominance signal processing circuit 67, the down-converted chrominance signal Cc is subjected to various signal processings including frequency-conversion, and the chrominance signal C1 is produced to be supplied to a decoder 69. Then, the colour difference signals (R-Y)1 and (B-Y)1 are obtained from the decker 69 and supplied to the integrated processing unit 63. The integrated processing unit 63, to which the detection output signal Ta having the low level is supplied from the aspect ratio detector 61, is operative to supply the luminance signal Y1 to a luminance signal output terminal 70 as a reproduced luminance signal Y and to produce the chrominance signal C1 based on the colour difference signals (R-Y)1 and (B-Y)1 for supplying the chrominance signal C1 to a chrominance signal output terminal 71 as a reproduced chrominance signal C.

Then, in the case that the second recording video signal obtained based on the video signal of 9:16 aspect ratio is recorded on the magnetic tape, the first recording video signal Sm is read by the magnetic head 45 and the additional recording video signal Sma is read by the magnetic head 49. Accordingly, the additional recording video signal Sma read by the magnetic head 49 is supplied to the aspect ratio detector 61, so that the detection output signal Ta having a high level is supplied from the aspect ratio detector 61 to the integrated processing unit 63. Further, the additional recording video signal Sma read by the magnetic head 49 is also supplied to the high definition signal processing circult 59. In the high definition signal processing circuit 59, a luminance signal Y2′ and colour difference signals (R-Y)2′ and (B-Y)2′ are formed based on the additional recording video signal Sma to be supplied to the integrated processing unit 63.

In this case also, the FM luminance signal Yf is derived from the HPF 53 to the luminance signal processing circuit 65 and the down-converted chrominance signal Cc is derived from the LPH 55 to the chrominance signal processing circuit 67. In the luminance signal processing circuit 65, the FM luminance signal Yf is subjected to various signal processings including frequency-demodulation, and the luminance signal Y1 is produced to be supplied to the integrated processing unit 63. In the chrominance signal processing circuit 67, the down-converted chrominance signal Cc is subjected to various signal processing including frequency-conversion, and the chrominance signal C1 is produced to be supplied to the decoder 69. Then, the colour difference signals (R-Y)1 and (B-Y)1 are obtained from the decoder 69 and supplied to the integrated processing unit 63.

The integrated processing unit 63, to which the detection output signal Ta having the high level is supplied from the aspect ratio detector 61, is operative to combine the luminance signal Y2′ with the luminance signal Y1 for obtaining the reproduced luminance signal Y and to supply the reproduced luminance signal Y to the luminance signal output terminal 70. The integrated processing unit 63 is further operative to obtain the reproduced chrominance signal C based on the colour difference signals ( R-Y )2′, (B-Y)2′, (R-Y)1 and (B-Y)1 and to supply the reproduced chrominance signal C to the chrominance signal output terminal 71.

In the reproducing system shown in Figure 5, the first recording video signal Sm, which is formed based on the first pick-up output signal Q1 corresponding to the images in the picture area D1 with the aspect ratio of 3:4 in the CCD element 11 shown in Figure 2, is read by the magnetic head 45 and processed to produce the reproduced luminance signal Y, and the reproduced chrominance signal C supplied to the chrominance signal output terminal 71, respectively, in the case that the first recording video signal Sm obtained based on the video signal of 3:4 aspect ratio is recorded on the magnetic tape and in the case that the second recording video signal obtained based on the video signal of 9:16 aspect ratio is recorded on the magnetic tape.

Thus when a video monitor having a display screen with an aspect ratio of 3:4 is used for obtaining a reproduced picture based on the reproduced luminance and chrominance signals Y and C supplied to the luminance signal output terminal 70 and the chrominance signal output terminal 71, respectively, under the condition in which the second recording video signal obtained based on the video signal of 9:16 aspect ratio is recorded on the magnetic tape, the reproduced picture is properly obtained with the aspect ratio of 3:4 on the display screen, and further when a video monitor having a display screen with an aspect ratio of 9:16 is used for obtaining a reproduced picture based on the reproduced luminance and chrominance signals Y and C supplied to the luminance signal output terminal 70 and the chrominance signal output terminal 71, respectively, under the condition in which the first recording video signal Sm obtained based on the video signal of 3:4 aspect ratio is recorded on the magnetic tape, the reproduced picture is obtained with the aspect ratio of 3:4 on the display screen.

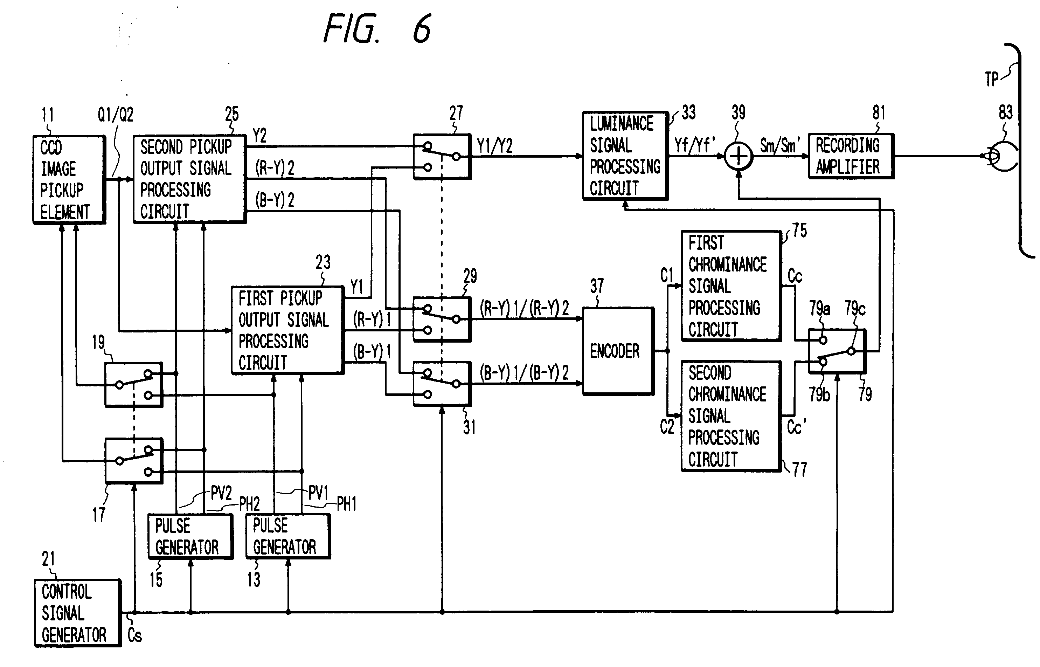

Figure 6 shows the second embodiment of apparatus for producing and recording a video signal. Blocks and portions corresponding to those of Figure 2 are marked with the same references and further description thereof will be omitted.

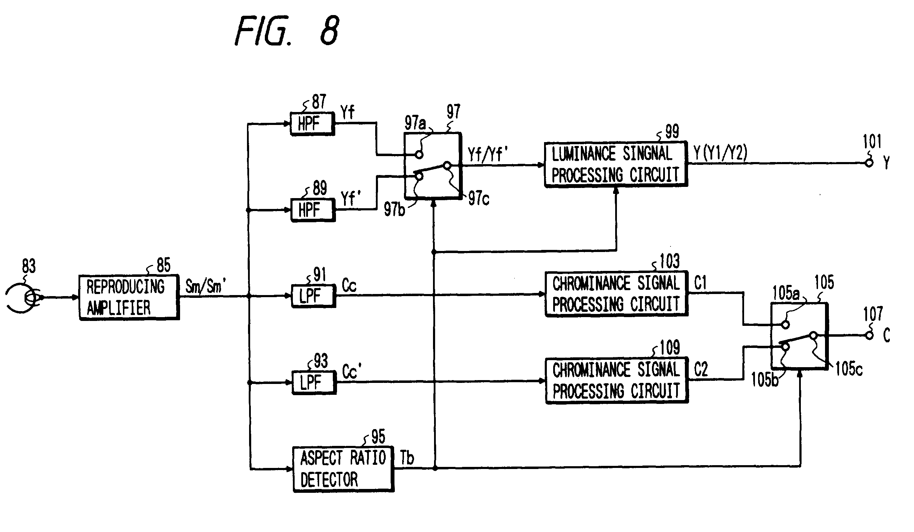

Referring to Figure 6, a luminance signal processing circuit 33 to which the luminance signal Y1 or Y2 having passed through a switch 27 is supplied, is also supplied with an aspect ratio changing signal Cs from a control signal generator 21. The luminance signal processing circuit 33 is operative to produce, based on the luminance signal Y1, an FM luminance signal Yf having frequency deviations between frequencies Fs and Fp, as shown in Figure 4, when the aspect ratio changing signal Cs has a low level, and to produce, based on the luminance signal Y2, an FM luminance signal Yf′ in a frequency band higher than the frequency band of the FM luminance signal Yf and having frequency deviations between frequencies Fs′ and Fp′, as shown in the frequency spectrum of Figure 7, which has abscissae representing frequency F and ordinates representing level L, when the aspect ratio changing signal Cs has a high level.

In the embodiment of Figure 6, no circuit corresponding to the high definition signal processing circuit 35 employed in the embodiment of Figure 2 is provided, and first and second chrominance signal processing circuits 75 and 77, to which a chrominance signal C1 or C2 obtained from an encoder 37 is supplied, and a switch 79, are provided in place of the chrominance signal processing circuit 41 of Figure 2. The switch 79 is supplied with the aspect ratio changing signal Cs, and is operative to cause outputs of the first and second chrominance signal processing circuits 75 and 77 to pass therethrough selectively in accordance with the high or low level of the aspect ratio changing signal Cs.

When the aspect ratio changing signal Cs from the control signal generator 21 has the low level and therefore the luminance signal Y1, the colour difference signal (R-Y)1 and the colour difference signal (B-Y)1 are obtained from the switches 27, 29 and 31, respectively, the FM luminance signal Yf which is formed based on the luminance signal Y1 to have the frequency deviations between frequencies Fs and Fp is obtained from the luminance signal processing circuit 33 to be supplied to a signal mixing circuit 39, and a down-converted chrominance signal Cc, which is formed based on the chrominance signal C1 formed based on the colour difference signals (R-Y)1 and (B-Y)1 from the encoder 37 to have a centre frequency Fc, as shown in Figure 4, is obtained from the first chrominance signal processing circuit 75 to be supplied to a selective contact 79a of the switch 79. The switch 79 is controlled by the aspect ratio changing signal Cs having the low level so as to cause a movable contact 79c to engage the selective contact 79a and therefore the down-converted chrominance signal Cc from the first chrominance signal processing circuit 75 is supplied through the switch 79 to the signal mixing circuit 39.

In the signal mixing circuit 39, the FM luminance signal Yf and the down-converted chrominance signal Cc are combined by frequency-multiplexing to produce a first recording video signal Sm which corresponds to images in a picture area D1 with an aspect ratio of 3: 4 formed in the CCD element 11, as shown in Figure 3. The first recording video signal Sm is supplied through a recording amplifier 81 to a rotary magnetic head 83 and recorded on a magnetic tape TP by the magnetic head 83 forming a plurality of oblique tracks on the tape TP. The magnetic head 83 is so arranged that each part of the first recording video signal Sm corresponding to one field period of the video signal of 3:4 aspect ratio is recorded in each oblique track.

Where the aspect ratio changing signal Cs from the control signal generator 21 has the high level and therefore the luminance signal Y2, the colour difference signal (R-Y)2 and the colour difference signal (B-Y) 2 are obtained from the switches 79, 29 and 31, respectively, the FM luminance signal Y2′ which is formed based on the luminance signal Y2 to have the frequency deviations between frequencies Fs′ and Fp′ is obtained from the luminance signal processing circuit 33 to be supplied to the signal mixing circuit 39 and a down-converted chrominance signal Cc′, which is formed based on the chrominance signal C2 formed based on the colour difference signals (R-Y)2 and (B-Y)2 from the encoder 37 to have a carrier frequency Fc′ higher than the carrier frequency Fc of the down-converted chrominance signal Cc and an occupied frequency bandwidth broader than that of the down-converted chrominance signal Cc, as shown in Figure 7, is obtained from the second chrominance signal processing circuit 77 to be supplied to a selective contact 79b of the switch 79. The switch 79 is controlled by the aspect ratio changing signal Cs having the high level so as to cause the movable contact 79c to engage the selective contact 79b and therefore the down-converted chrominance signal Cc′ from the second chrominance signal processing circuit 77 is supplied through the switch 79 to the signal mixing circuit 39.

In the signal mixing circuit 39, the FM luminance signal Yf′ which is enlarged in its frequency band upwardly compared with the frequency band of the FM luminance signal Yf, and the down-converted chrominance signal Cc′ which is also enlarged in its frequency band upwardly compared with the frequency band of the down-converted chrominance signal Cc, are combined by frequency-multiplexing to produce a second recording video signal Sm′ which corresponds to images in a picture area D2 with an aspect ratio of 9: 16 formed in the CCD element 11, as shown in Figure 3. The second recording video signal Sm′ is supplied through the recording amplifier 81 to the magnetic head 83 and recorded on the tape TP by the magnetic head 83 forming a plurality of oblique tracks on the tape TP in such a manner that each part of the second recording video signal Sm′ corresponding to one field period of the video signal of 9:16 aspect ratio is recorded in each oblique track.

In such a case, an FM audio signal Af′ having a centre frequency Fa′ may be allocated a relatively narrow space between the frequency band of the down-converted chrominance signal Cc′ and the frequency band of the FM luminance signal Yf′, as shown with a dotdash line in Figure 7.

As described above, in the embodiment of Figure 6, the first recording video signal Sm is obtained based on the video signal of 3:4 aspect ratio formed by the luminance signal Y1 and the colour difference signals (R-Y)1 and (B-Y)1, which are formed based on the first pick-up output signal Q1 corresponding to the images in the picture area with the first aspect ratio of 3:4 formed in the CCD element 11, and the second recording video signal Sm′ which is formed by the first recording video signal Sm and the additional recording video signal Sma is also obtained based on the video signal of 9:16 aspect ratio formed by the luminance signal Y2 and the colour difference signals (R-Y)2 and (B-Y)2, which are formed based on the second pick-up output signal Q2 corresponding to the images in the picture area with the second aspect ratio of 9:16 formed in the CCD element 11. Then, either of the first recording video signal Sm obtained based on the video signal of 3:4 aspect ratio and the second recording video signal Sm′ obtained based on the video signal of 9:16 aspect ratio is properly recorded on the tape TP without constraint in frequency or other restrictions.

Figure 8 shows a reproducing system for obtaining a reproduced luminance signal and a reproduced chrominance signal from a magnetic tape on which the first recording video signal Sm obtained based on the video signal of 3:4 aspect ratio, or the second recording video signal Sm′ obtained based on the video signal of 9:16 aspect ratio is recorded by the embodiment of Figure 6.

Referring to Figure 8, the magnetic head 83 provided in the embodiment of Figure 6 is used as a reproducing magnetic head. The magnetic head 83 is arranged to scan each of record tracks on a magnetic tape in which the first recording video signal Sm or the second recording video signal Sm′ is recorded for reading the first or second recording video signal Sm or Sm′ from the magnetic tape.

The first recording video signal Sm or second recording video signal Sm′ read from the magnetic tape by the magnetic head 83 is supplied through a reproducing amplifier 85 to a high pass filter 87 corresponding to the FM luminance signal Yf, a high pass filter 89 corresponding to the FM luminance signal Yf′, a low pass filter 91 corresponding to the down-converted chrominance signal Cc, a low pass filter 93 corresponding to the down-converted chrominance signal Cc′, and an aspect ratio detector 95.

Where the first recording video signal Sm is obtained from the magnetic head 83, a detection output signal Tb having a low level is obtained from the aspect ratio detector 95. Under such a condition, the FM luminance signal Yf is supplied from the HPF 87 to a selective contact 97a of a switch 97. The switch 97 to which the detection output signal Tb is supplied from the aspect ratio detector 95 is controlled by the detection output signal Tb having the low level so as to cause a movable contact 97c to engage the selective contact 97a and therefore the FM luminance signal Yf derived from the HPF 87 is supplied through the switch 97 to a luminance signal processing circuit 99. The luminance signal processing circuit 99 subjects the FM luminance signal Yf to various signal processings including frequency-demodulation in response to the detection output signal Tb having the low level, and the luminance signal Y1 is obtained from the luminance signal processing circuit 99 to be supplied to a luminance signal output terminal 101 as a reproduced luminance signal Y.

The down-converted chrominance signal Cc is supplied from the LPF 91 to a chrominance signal processing circuit 103, where it is subjected to various signal processings including frequency-conversion, and the chrominance signal C1 is produced to be supplied to a selective contact 105a of a switch 105. The switch 105 to which the detection output signal Tb is supplied from the aspect ratio detector 95 is controlled by the detection output signal Tb having the low level so as to cause a movable contact 105c to engage the selective contact 105a, and therefore the chrominance signal C1 obtained from the chrominance signal processing circuit 103 is supplied through the switch 105 to a chrominance signal output terminal 107 as a reproduced chrominance signal C.

On the other hand, in the case that the second recording video signal Sm′ is obtained from the magnetic head 83, the detection output signal Tb having a high level in response to the second recording video signal Sm′ is obtained from the aspect ratio detector 95. In this condition, the FM luminance signal Yf′ is supplied from the HPF 89 to a selective contact 97b of the switch 97. The switch 97 is controlled by the detection output signal Tb having the high level so as to cause the movable contact 97c to engage the selective contact 97b and therefore the FM luminance signal Yf′ derived from the HPF 89 is supplied through the switch 97 to the luminance signal processing circuit 99. The luminance signal processing circuit 99 is operative to cause the FM luminance signal Yf′ to be subjected to various signal processings including frequency-demodulation in response to the detection output signal Tb having the high level, and the luminance signal Y2 is obtained from the luminance signal processing circuit 99 to be supplied to the luminance signal output terminal 101 as the reproduced luminance signal Y.

The down-converted chrominance signal Cc′ is derived from the LPF 93 to the chrominance signal processing circuit 109 where it is subjected to various signal processings including frequency-conversion, and the chrominance signal C2 is produced to be supplied to a selective contact 105b of the switch 105. The switch 105 is controlled by the detection output signal Tb having the high level so as to cause the movable contact 105c to engage the selective contact 105b and therefore the chrominance signal C2 obtained from the chrominance signal processing circuit 109 is supplied through the switch 105 to the chrominance signal output terminal 107 as the reproduced chrominance signal C.

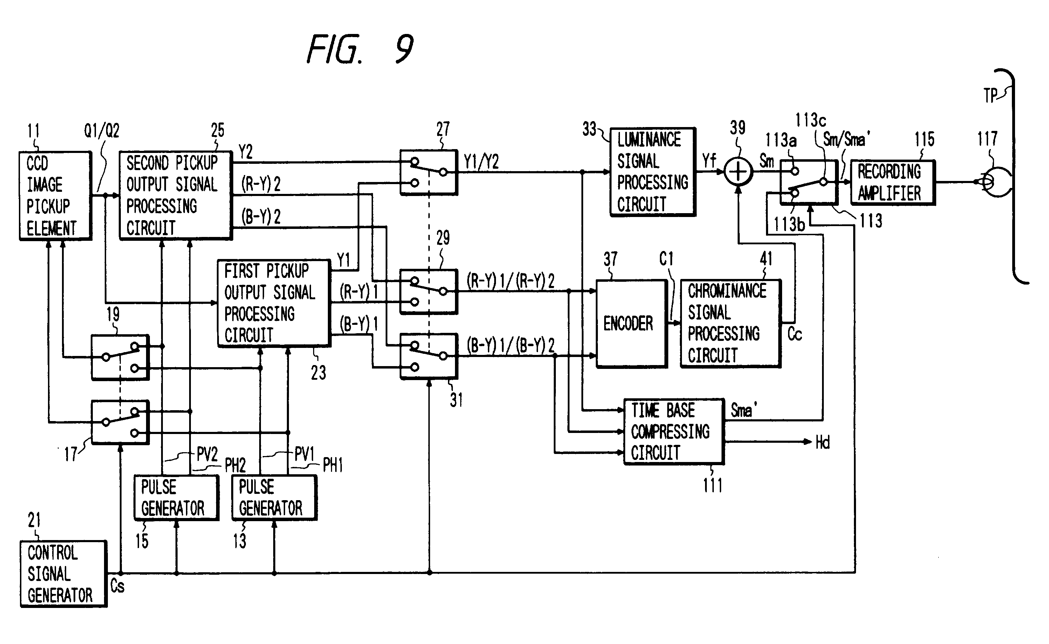

Figure 9 shows the third embodiment of apparatus for producing and recording a video signal. Blocks and portions corresponding to those of Figure 2 are marked with the same references and further description thereof will be omitted.

Referring to Figure 9, a time base compressing circuit 111 is provided in place of the high definition signal processing circuit 35 of Figure 2. A luminance signal Y1 or Y2 from a switch 27, a colour difference signal (R-Y)1 or (R-Y)2 from a switch 29, and a colour difference signal (B-Y)1 or (B-Y)2 from a switch 31 are supplied to the time base compressing circuit 111. Further, a switch 113 to which an aspect ratio changing signal Cs is supplied from a control signal generator 21 is provided for causing outputs of a signal mixing circuit 39 and the time base compressing circuit 111 to pass therethrough in accordance with a high or low level of the aspect ratio changing signal Cs.

When the aspect ratio changing signal Cs from the control signal generator 21 has the low level and therefore the luminance signal Y1, the colour difference signal (R-Y)1 and the colour difference signal (B-Y) 1 are obtained from the switches 27, 29 and 31, respectively, a first recording video signal Sm which corresponds to images in a picture area D1 with an aspect ratio of 3:4 formed in a CCD element 11, as shown in Figure 3, is obtained from the signal mixing circuit 39 in the same manner as the embodiment of Figure 2, and supplied to a selective contact 113a of the switch 113. The switch 113 is controlled by the aspect ratio changing signal Cs having the low level so as to cause a movable contact 113c to engage the selective contact 113a, and therefore the first recording video signal Sm from the signal mixing circuit 39 is supplied through the switch 113 and a recording amplifier 115 to a rotary magnetic head 117, and recorded on a magnetic tape TP by the magnetic head 117 forming a plurality of oblique tracks on the tape TP. The magnetic head 117 is so arranged that each part of the first recording video signal Sm corresponding to one field of the video signal of 3:4 aspect ratio is recorded in each oblique track.

In such a case, the output of the time base compressing circuit 111 is prevented by the switch 113 from being transmitted to the recording amplifier 115.

Then, in the case that the aspect ratio changing signal Cs from the control signal generator 21 has the high level and therefore the luminance signal Y2, the colour difference signal (R-Y)2 and the colour difference signal (B-Y)2 are obtained from the switches 27, 29 and 31, respectively, a second recording video signal Sma′ which is produced based on the luminance signal Y2 and the colour difference signals (R-Y)2 and (B-Y)2 in the form of time base-compressed signal is obtained from the time base compressing circuit 111. The second recording video signal Sma′ is formed to contain a time base-compressed sequent of the luminance signal Y2, a time base-compressed segment of the colour difference signal (R-Y)2 and a time base-compressed sequent of the colour difference signal (B-Y)2 arranged in sequence in each horizontal period.

The second recording video signal Sma′ thus formed in the form of a time base-compressed signal is supplied from the time base compressing circuit 111 to a selective contact 113b of the switch 113. The switch 113 is controlled by the aspect ratio changing signal Cs having the high level so as to cause the movable contact 113c to engage the selective contact 113b and therefore the second recording video signal Sma′ from the time base compressing circuit 111 is supplied through the switch 113 and the recording amplifier 115 to the magnetic head 117.

Further, the time base compressing circuit 111 is operative to supply a driving portion of the magnetic head 117 with a head speed control signal Hd in order to double the speed of rotation of the magnetic head 117 when the second recording video signal Sma′ is supplied to the magnetic head 117. Accordingly, the second recording video signal Sma′ is recorded on the tape TP by the magnetic head 117 rotated at double speed thereby to form twice as many oblique tracks compared with when recording the first recording video signal Sm. This results in that each part of the second recording video signal Sma′ corresponding to one field period of the video signal of 9:16 aspect ratio is recorded in each two adjacent oblique tracks.

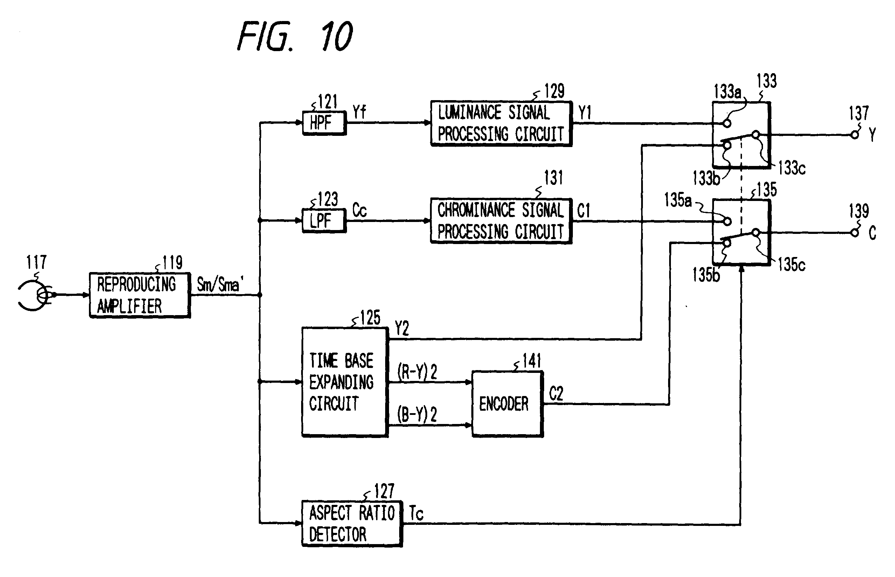

Figure 10 shows a reproducing system for obtaining a reproduced luminance signal and a reproduced chrominance signal from a magnetic tape on which the first recording video signal Sm obtained based on the video signal of 3:4 aspect ratio or the second recording video signal Sma′ obtained based on the video signal of 9:16 aspect ratio is recorded by the embodiment of Figure 9.

Referring to Figure 10, the magnetic head 117 which are provided in the embodiment of Figure 9 is used as a reproducing magnetic head. The magnetic head 117 is arranged to scan each of record tracks on a magnetic tape in which the first recording video signal Sm or the second recording video signal Sm′ is recorded for reading the first or second recording video signal Sm or Sm′ from the magnetic tape. In the event of scanning the oblique tracks in which the second recording video signal Sma′ is recorded, the magnetic head 117 is driven to rotate at double speed compared with the speed for scanning the oblique tracks in which the first recording video signal Sm is recorded.

The first recording video signal Sm or second recording video signal Sma′ read from the magnetic tape by the magnetic head 117 is supplied through a reproducing amplifier 119 to a high pass filter 121 corresponding to the FM luminance signal Yf, a low pass filter 123 corresponding to the down-converted chrominance signal Cc, a time base expanding circuit 125, and an aspect ratio detector 127.

In the case that the first recording video signal Sm is obtained from the magnetic head 117, a detection output signal Tc having a low level is obtained from the aspect ratio detector 127 in response to the first recording video signal Sm. Under such a condition, the FM luminance signal Yf is supplied from the HPF 121 to a luminance signal processing circuit 129 and the down-converted chrominance signal Cc is derived from the LPF 123 to a chrominance signal processing circuit 131. The luminance signal processing circuit 129 is operative to cause the FM luminance signal Yf to be subjected to various signal processings including frequency-demodulation, and the luminance signal Y1 is obtained from the luminance signal processing circuit 129 to be supplied to a selective contact 133a of a switch 133. The chrominance signal processing circuit 131 is operative to cause the down-converted chrominance signal Cc to be subjected to various signal processings including frequency-conversion, and the chrominance signal C1 is obtained from the chrominance signal processing circuit 131 to be supplied to a selective contact 135a of a switch 135.

The switch 133 to which the detection output signal Tc is supplied from the aspect ratio detector 127 is controlled by the detection output signal Tc having the low level so as to cause a movable contact 133c to engage the selective contact 133a, and therefore the luminance signal y1 obtained from the luminance signal processing circuit 129 is supplied through the switch 133 to a luminance signal output terminal 137 as a reproduced luminance signal Y. Similarly, the switch 135 to which the detection output signal Tc is also supplied from the aspect ratio detector 127 is controlled by the detection output signal Tc having the low level so as to cause a movable contact 135c to be connected to the selective contact 135a, and therefore the chrominance signal C1 obtained from the chrominance signal processing circuit 131 is supplied through the switch 135 to a chrominance signal output terminal 139 as a reproduced chrominance signal C.

On the other hand, in the case that the second recording video signal Sma′ is obtained from the magnetic head 117, the detection output signal Tc having the high level is obtained from the aspect ratio detector 127 in response to the second recording video signal Sma′. Under such a condition, in the time base expanding circuit 125, the second recording video signal Sma′ is subjected to various signal processings including time base-expansion and the luminance signal Y2 and the colour difference signals (R-Y) 2 and (B-Y)2 are produced based on the second recording video signal Sma′. Then, the luminance signal Y2 is supplied from the time base expanding circuit 125 to a selective contact 133b of the switch 133 and the colour difference signals (R-Y)2 and (B-Y) 2 are supplied from thetime base expanding circuit 125 to an encoder 141. In the encoder 141, the chrominance signal C2 is produced based on the colour difference signals (R-Y)2 and (B-Y)2 to be supplied to a selective contact 135b of the switch 135.

The switch 133 is controlled by the detection output signal Tc having the high level so as to cause the movable contact 133c to engage the selective contact 133b and therefore the luminance signal Y2 obtained from the time base expanding circuit 125 is supplied through the switch 133 to the luminance signal output terminal 137 as the reproduced luminance signal Y. Similarly, the switch 135 is controlled by the detection output signal Tc having the high level so as to cause the movable contact 135c to engage the selective contact 135b, and therefore the chrominance signal C2 obtained from the encoder 141 is supplied through the switch 135 to the chrominance luminance signal output terminal 139 as the reproduced chrominance signal C.

## Claims

1. An apparatus for producing and recording a video signal, the apparatus comprising:
signal supplying means (11, 13, 15) operative to pick up images in a picture area with one of first and second forms to supply selectively a first pick-up output signal (Q1) corresponding to the images in the picture area of the first form and a second pick-up output signal (Q2) corresponding to the images in the picture area of the second form;
signal recording means comprising signal processing circuit means (23. 25, 33, 35, 37, 41; 75, 77; 111) which is caused to be selectively in a first condition for processing the first pick-up output signal (Q1) to produce a first video signal and in a second condition for processing the second pick-up output signal (Q2) to produce a second video signal, and recording head means (45, 49; 83; 117) for recording one of the first and second video signals produced by said signal processing circuit means (23, 25, 33, 35, 37, 39, 41; 75. 77; 111) on a recording medium (TP); and
operation control means (17, 19, 21, 27, 29, 31; 79; 113) for controlling said signal supplying means (11, 13, 15) and said signal recording means so as selectively to cause said signal supplying means (11, 13, 15) to be operative to supply the first pick-up output signal (Q1) and said signal processing circuit means (23, 25, 33, 35, 37, 39, 41; 75, 77; 111) in said signal recording means to be in the first condition, and to cause said signal supplying means to be operative to supply the second pick-up output signal (Q2) and said signal processing circuit means (23, 25, 33, 35, 37, 39, 41; 75, 77; 111) in said signal recording means to be in the second condition; characterised in that said first form is a first aspect ratio, said second form is a second aspect ratio and said second video signal has greater bandwidth than said first video signal.

2. Apparatus according to claim 1 wherein said first aspect ratio is 3:4 and said second aspect ratio is 9:16.

3. Apparatus according to claim 1 wherein said signal supplying means (11, 13, 15) comprises an image pick-up element (11) and a driving device (13, 15) for driving said image pick-up element.

4. Apparatus according to claim 1, claim 2 or claim 3 wherein said recording head means (45, 49) comprises a first recording head device (45) for recording one of the first video signal and a first part of said second video signal corresponding to said first video signal and a second recording head device (49) for recording a second part of said second video signal other than said first part.

5. Apparatus according to claim 4 wherein said first and second recording head devices (45, 49) comprise a pair of rotary magnetic heads (45, 49) having respective different gap azimuth angles from each other, and being operative to form respective record tracks adjacent to each other on a magnetic tape (TP).

6. Apparatus according to claim 1 wherein said signal processing circuit means (23, 25, 33, 35, 37, 39, 41; 75, 77; 111) comprises a first circuit arrangement for producing said first video signal based on said first pick-up output signal (Q1) and a second circuit arrangement for producing said second video signal based on said second pick-up output signal (Q2), and a frequency bandwidth of said second video signal is broader than the frequency bandwidth of said first video signal.

7. Apparatus according to claim 1 wherein said signal processing circuit means (23, 25, 33, 35, 37, 39, 41; 75, 77; 111) comprises time base compressing means (11) operative in said second condition to produce said second video signal in the form of a time base-compressed signal containing luminance and chrominance signal components.

8. Apparatus according to claim 7 wherein said recording head means (117) is arranged to record said second video signal on a recording medium (TP) at double the speed relative to said recording medium (TP) used for recording said first video signal.

9. Apparatus according to claim 8 wherein said recording head means (117) is arranged to record each part of said second video signal corresponding to one field period in each two adjacent record tracks on the recording medium.

10. Apparatus according to claim 1 further comprising signal reading means (45, 49; 83; 117) for reading one of said first and second video signals recorded by said recording head means, signal reproducing means operative to be selectively in a first reproducing condition for obtaining a reproduced signal output based on said first video signal and in a second reproducing condition for obtaining a reproduced signal output based on said second video signal, aspect ratio detecting means (61; 95; 127) for detecting at least one of said first and second aspect ratios concerned in said one of said first and second video signals read by said signal reading means, and additional operation control means (63; 105; 133, 135) causing said signal reproducing means selectively to be in said first reproducing condition and in said second reproducing condition in response to a detection output signal of said aspect ratio detecting means (61; 95; 127 ) .

## Patentansprüche

1. Gerät zum Erzeugen und Aufzeichnen eines Videosignals, wobei das Gerät aufweist:
eine Signalliefereinrichtung (11, 13, 15), die Bilder in einem Bildbereich mit einer ersten oder zweiten Form abtastet, um selektiv ein erstes Abtastausgangssignal (Q1) entsprechend den Bildern im Bildbereich der ersten Form oder ein zweites Abtastausgangssignal (Q2) entsprechend den Bildern im Bildbereich der zweiten Form zu liefern; eine Signalaufzeichnungseinrichtung, die eine Signalverarbeitungsschaltungseinrichtung (23, 25, 33, 35, 37, 41; 75, 77; 111) aufweist, die selektiv in einen ersten Zustand zur Verarbeitung des ersten Abtastausgangssignals (Q1) versetzt wird, um ein erstes Videosignal zu erzeugen, und in einen zweiten Zustand zur Verarbeitung des zweiten Abtastausgangssignals (Q2), um ein zweites Videosignal zu erzeugen; und eine Aufzeichnungskopfeinrichtung (45, 49; 83; 117) zum Aufzeichnen des ersten oder zweiten Videosignals, das durch die Signalverarbeitungsschaltungseinrichtung (23, 35, 33, 35, 37, 39, 41; 75, 77; 111) erzeugt wurde, auf dem Aufzeichnungsträger (TP); und
eine Betriebssteuereinrichtung (17, 19, 21, 27, 29, 31; 79; 113) zum Steuern der Signalliefereinrichtung (11, 13, 15) und der Signalaufzeichnungseinrichtung, um selektiv die Signalliefereinrichtung (11, 13, 15) zu veranlassen, das erste Abtastausgangssignal (Q1) zu liefern und daß die Signalverarbeitungsschaltungseinrichtung (23, 25, 33, 35, 37, 39, 41; 75, 77; 111) in der Signalaufzeichnungseinrichtung im ersten Zustand ist, oder die Signalliefereinrichtung zu veranlassen, das zweite Abtastausgangssignal (Q2) zu liefern und daß die Signalverarbeitungsschaltungseinrichtung (23, 25, 33, 35, 37, 39, 41; 75, 77; 111) in der Signalaufzeichnungseinrichtung im zweiten Zustand ist; **dadurch gekennzeichnet**,
daß die erste Form ein erstes Bildseitenverhältnis ist, daß die zweite Form ein zweites Bildseitenverhältnis ist, und daß das zweite Videosignal eine größere Bandbreite als das erste Videosignal hat.

2. Gerät nach Anspruch 1, wobei das erste Bildseitenverhältnis 3:4 und das zweite Bildseitenverhältnis 9:16 ist.

3. Gerät nach Anspruch 1, wobei die Signalliefereinrichtung (11, 13, 15) ein Bildabtastelelment (11) und eine Ansteuereinrichtung (13, 15) zum Ansteuern des Bildabtastelements umfaßt.

4. Gerät nach Anspruch 1, 2 oder 3, wobei die Aufzeichnungskopfeinrichtung (45, 49) eine erste Aufzeichnungskopfeinrichtung (45) zum Aufzeichnen des ersten Videosignals oder eines ersten Teils des zweiten Videosignals entsprechend dem ersten Videosignal aufweist, und eine zweite Aufzeichnungskopfeinrichtung (49) zum Aufzeichnen eines zweiten Teils des zweiten Videosignals, der sich gegenüber dem ersten Teil unterscheidet.

5. Gerät nach Anspruch 4, wobei die erste und zweite Aufzeichnungskopfeinrichtung (45, 49) ein Paar von Drehmagnetköpfen (45, 49) umfaßt, die entsprechende verschiedene Spaltazimuthwinkel voneinander aufweisen und entsprechende Aufzeichnungsspuren einander benachbart auf einem Magnetband (TP) bilden.

6. Gerät nach Anspruch 1, wobei die Signalverarbeitungsschaltungseinrichtung (23, 25, 33, 35, 37, 39, 41; 75, 77; 111) eine erste Schaltungsanordnung aufweist, um das erste Videosignal auf der Basis des ersten Abtastausgangssignals (Q1) zu erzeugen, und eine zweite Schaltungsanordnung, um das zweite Videosignal auf der Basis des zweiten Abtastausgangssignals (Q2) zu erzeugen, wobei eine Frequenzbandbreite des zweiten Videosignals breiter ist als die Frequenzbandbreite des ersten Videosignals.

7. Gerät nach Anspruch 1, wobei die Signalverarbeitungsschaltungseinrichtung (23, 25, 33, 35, 37, 39, 41; 75, 77; 111) eine Zeitbasis-Komprimiereinrichtung (111) aufweist, die im zweiten Zustand das zweite Videosignal in Form eines zeitbasis-komprimierten Signals erzeugt, welches Luminanz- und Chrominanzsignalkomponenten enthält.

8. Gerät nach Anspruch 7, wobei die Aufzeichnungskopfeinrichtung (117) eingerichtet ist, das zweite Videosignal auf einem Aufzeichnungsträger (T) mit der doppelten Geschwindigkeit in bezug auf den Aufzeichnungsträger (TP) aufzuzeichnen, der für die Aufzeichnung des ersten Videosignals verwendet wird.

9. Gerät nach Anspruch 8, wobei die Aufzeichnungskopfeinrichtung (117) eingerichtet ist, um jeden Teil des zweiten Videosignals entsprechend einer Teilbildperiode in jeder zweiten benachbarten Aufzeichnungsspur auf dem Aufzeichnungsträger aufzuzeichnen.

10. Gerät nach Anspruch, welches außerdem umfaßt
eine Signalleseeinrichtung (45, 49; 83; 117), um das erste oder zweite Videosignal, das durch die Aufzeichnungskopfeinrichtung aufgezeichnet ist, zu lesen, wobei die Signalwiedergabeeinrichtung selektiv in einem ersten Wiedergabezustand ist, um ein Wiedergabeausgangssignal auf der Basis des ersten Videosignals zu erhalten, und in einem zweiten Wiedergabezustand, um ein Wiedergabeausgangssignal auf der Basis des zweiten Videosignals zu erhalten,
eine Bildseitenverhältnisermittlungseinrichtung (61; 95; 127), um zumindest das erste oder zweite Bildseitenverhältnis zu ermitteln, das für das erste oder zweite Videosignal, welches durch die Signalleseeinrichtung gelesen wird, von Belang ist, und
eine zusätzliche Betriebssteuereinrichtung (63, 105; 133, 135), die die Signalwiedergabeeinrichtung selektiv veranlaßt, daß diese im ersten Wiedergabezustand oder im zweiten Wiedergabezustand in Abhängigkeit von einem Ermittlungsausgangssignal der Bildseitenverhältnisermittlungseinrichtung (61; 95; 127) ist.

## Revendications

1. Appareil pour produire et enregistrer un signal vidéo, l'appareil comprenant :
un moyen d'application de signal (11, 13, 15) fonctionnant pour saisir des images dans une zone d'image visuelle selon l'une de première et seconde formes afin d'appliquer sélectivement un premier signal de sortie de saisie (Q1) correspondant aux images dans la zone d'image visuelle de la première forme et un second signal de sortie de saisie (Q2) correspondant aux images dans la zone d'image visuelle de la seconde forme ;
un moyen d'enregistrement de signal comprenant un moyen de circuit de traitement de signal (23, 25, 33, 35, 37, 41 ; 75, 77 ; 111) qui est amené à être sélectivement dans une première condition pour traiter le premier signal de sortie de saisie (Q1) afin de produire un premier signal vidéo et dans une seconde condition pour traiter le second signal de sortie de saisie (Q2) afin de produire un second signal vidéo, et un moyen de tête d'enregistrement (45, 49 ; 83 ; 117) pour enregistrer l'un des premier et second signaux vidéo produit par ledit moyen de circuit de traitement de signal (23, 25, 33, 35, 37, 39, 41 ; 75, 77 ; 111) sur un support d'enregistrement (TP) ; et
un moyen de commande de fonctionnement (17, 19, 21, 27, 29, 31; 79 ; 113) pour commander ledit moyen d'application de signal (11, 13, 15) et ledit moyen d'enregistrement de signal sélectivement de manière à forcer ledit moyen d'application de signal (11, 13, 15) à fonctionner pour appliquer le premier signal de sortie de saisie (Q1) et ledit moyen de circuit de traitement de signal (23, 25, 33, 35, 37, 39, 41 ; 75, 77 ; 111) dans ledit moyen d'enregistrement de signal à être dans la première condition et de manière à forcer ledit moyen d'application de signal à fonctionner pour appliquer le second signal de sortie de saisie (Q2) et ledit moyen de circuit de traitement de signal (23, 25, 33, 35, 37, 39, 41 ; 75, 77 ; 111) dans ledit moyen d'enregistrement de signal à être dans la seconde condition,
caractérisé en ce que :
ladite première forme est un premier rapport d'allongement, ladite seconde forme est un second rapport d'allongement et ledit second signal vidéo présente une largeur de bande plus grande que celle dudit premier signal vidéo.

2. Appareil selon la revendication 1, dans lequel ledit premier rapport d'allongement vaut 3 : 4 et ledit second rapport d'allongement vaut 9 : 16.

3. Appareil selon la revendication 1, dans lequel ledit moyen d'application de signal (11, 13, 15) comprend un élément de saisie d'image (11) et un dispositif de pilotage (13, 15) pour piloter ledit élément de saisie d'image.

4. Appareil selon la revendication 1, 2 ou 3, dans lequel ledit moyen de tête d'enregistrement (45, 49) comprend un premier dispositif de tête d'enregistrement (45) pour enregistrer soit le premier signal vidéo soit une première partie dudit second signal vidéo correspondant audit premier signal vidéo et un second dispositif de tête d'enregistrement (49) pour enregistrer une seconde partie dudit second signal vidéo autre que ladite première partie.

5. Appareil selon la revendication 4, dans lequel lesdits premier et second dispositifs de tête d'enregistrement (45, 49) comprennent une paire de têtes magnétiques tournantes (45, 49) présentant des angles d'azimut d'espace respectifs différents l'un de l'autre et pouvant fonctionner pour former des pistes d'enregistrement respectives adjacentes les unes aux autres sur une bande magnétique (TP).

6. Appareil selon la revendication 1, dans lequel ledit moyen de circuit de traitement de signal (23, 25, 33, 35, 37, 39, 41 ; 75, 77 ; 111) comprend un premier agencement de circuit pour produire ledit premier signal vidéo sur la base dudit premier signal de sortie de saisie (Q1) et un second agencement de circuit pour produire ledit second signal vidéo sur la base dudit second signal de sortie de saisie (Q2), et une largeur de bande de fréquences dudit second signal vidéo est plus large que la largeur de bande de fréquences dudit premier signal vidéo.

7. Appareil selon la revendication 1, dans lequel ledit moyen de circuit de traitement de signal (23, 25, 33, 35, 37, 39, 41 ; 75, 77 ; 111) comprend un moyen de compression de base de temps (11) qui fonctionne dans ladite seconde condition pour produire ledit second signal vidéo sous la forme d'un signal à base de temps comprimée contenant des composantes de signal de luminance et de chrominance.

8. Appareil selon la revendication 7, dans lequel ledit moyen de tête d'enregistrement (117) est agencé pour enregistrer ledit second signal vidéo sur un support d'enregistrement (TP) à une vitesse qui est le double de celle utilisée par rapport audit support d'enregistrement (TP) pour enregistrer ledit premier signal vidéo.

9. Appareil selon la revendication 8, dans lequel ledit moyen de tête d'enregistrement (117) est agencé pour enregistrer chaque partie dudit second signal vidéo correspondant à une période d'une trame dans chaque jeu de deux pistes d'enregistrement adjacentes sur le support d'enregistrement.

10. Appareil selon la revendication 1, comprenant en outre un moyen de lecture de signal (45, 49 ; 83 ; 117) pour lire soit ledit premier signal vidéo soit ledit second signal vidéo enregistré par ledit moyen de tête d'enregistrement, un moyen de reproduction de signal fonctionnant pour être sélectivement dans une première condition de reproduction pour obtenir une sortie de signal reproduit sur la base dudit premier signal vidéo et dans une seconde condition de reproduction pour obtenir une sortie de signal reproduit sur la base dudit second signal vidéo, un moyen de détection de rapport d'allongement (61 ; 95 ; 127) pour détecter au muins l'un desdits premier et second rapports d'allongement concernés dans ledit un desdits premier et second signaux vidéo lu par ledit moyen de lecture de signal, et un signaux vidéo lu par ledit moyen de lecture de signal, et un moyen de commande de fonctionnement supplémentaire (63 ; 105 ; 133, 135) qui force ledit moyen de reproduction de signal à être sélectivement dans ladite première condition de reproduction et dans ladite seconde condition de reproduction en réponse à un signal de sortie de détection dudit moyen de détection de rapport d'allongement (61 ; 95 ; 127).
